# EUROPEAN PATENT SPECIFICATION

(11) **EP 2 683 557 B1**
(45) Date of publication and mention of the grant of the patent: **25.03.2015**
(21) Application number: 12710309.1
(22) Date of filing: 08.03.2012
(51) Int. Cl.: B42D 15/00, G02B 5/10, G02B 5/20, G07D 7/12, G07D 7/00

(54) **SECURITY ELEMENT FOR DOCUMENTS**
SICHERHEITSELEMENT FÜR DOKUMENTE
ÉLÉMENT DE SÉCURITÉ POUR DOCUMENTS

(30) Priority: 08.03.2011 GB 201103900
(43) Date of publication of application: 15.01.2014
(73) Proprietor: Eastwood, Ian, Rossendale, Lancashire BB4 9JZ (GB)
(72) Inventor: Eastwood, Ian, Rossendale, Lancashire BB4 9JZ (GB)
(74) Representative: Walker, Ross Thomson
(86) International application number: PCT/GB2012/050514
(87) International publication number: WO 2012/120305

(56) References cited:
- WO-A2-2008/029128
- DE-A1-102009 022 612
- US-A1- 2003 143 426

## Description

### Field of the Invention

The present invention relates to a security element for use on value documents such as bank notes, intended to enable such to be readily identified as being genuine and distinguish such from counterfeits.

### Background of the Invention

With value documents such as bank notes, various features, including utilising special paper, which may include watermarks and embedded metallic thread, and a holographic, strip as well as ultraviolet features, and other features, to ensure that the note is as difficult to counterfeit as possible, are currently incorporated into each bank note, to help individuals, traders or banks to determine whether the note is genuine.

Numerous different attempts have been made over the years to incorporate such features as will enable the identification of a counterfeit note, varying from the overt look and feel of the note, to covert elements that require simple devices to check the authenticity, through to more complex note sorting machines and algorithms, and finally, forensic methods that are typically slow and use expensive equipment. These levels can be described as: level 1 - public recognition; level 2 - teller-assist; level 3 - machine readable; and finally, level 4 - forensic; and these can be sub-divided into further levels.

An example of a simple level 2 security element is the incorporation of a UV feature on many bank notes, which normally consists of a figure or number that appears when the note is placed under a standard UV light, and such devices are used in many bars or shops. With such a feature, the figures of numbers on the bank note usually consist of red and green fluorescent dyes printed in close proximity and perfect register. Until recently, notes produced according to this method required expensive machines and because of this have been relatively difficult to counterfeit. Consequently, such a UV feature has been a good level 2 teller-assist feature, giving the public confidence in the integrity of the note. However, with the advent of digital imaging and cheap inkjet capability, it has become easier to reproduce this feature on counterfeits with high integrity, resulting in loss of confidence in the note itself, with shops refusing to accept particular denominations. Nevertheless, the widespread adoption of such UV lamps by the public means that there is a legacy of instruments at thousands of transactions centres that could be used if a simple feature could be developed for incorporation in the bank note, which could not be easily counterfeited but would utilise such UV lamps.

A further difficulty with any anti-counterfeit features on banknotes is that they should be simple to use and easy to explain to the public, so that such can be readily accepted for general use.

The object of the present invention is however, to provide a relatively simple anti-counterfeit measure by improving the UV feature in a manner which is expensive to reproduce but is simple to explain and use. Moreover, because the feature is different and produces a changing image, it will encourage the teller or retailer to spend a little more time examining the note. This is beneficial as it is received wisdom in the field of banknote technology that the chance of spotting a counterfeit increases with the time taken to examine the note.

DE 202009022672 A1 discloses a security element having an array of refectors as focusing elements which combine so as to generate an enlarged image.

### Summary of the Invention

According to the present invention there is provided a security element for incorporation into value documents, comprising a reflecting layer having an array of focusing means overlaid with a layer having at least one pre-printed fluorescent zone, and whereby, when the security element is illuminated by UV light, the security element will vary between a state of fluorescence and non-fluorescence according to the angle of incidence of the UV light.

Depending upon the angle of incidence of the rays of UV light that shine on the security element, the focusing means will either direct the UV light towards a fluorescent zone, which results in the security element fluorescing, or a non-fluorescent area, which does not provide fluorescence. In this way the movement of the security element relative to a UV light source provides a dynamic image.

Preferably the reflecting layer may be overlaid with a layer having at least two pre-printed fluorescent zones of differing colour, and whereby, when the security element is illuminated by UV light, the colour of fluorescence of the security element will vary according to the angle of incidence of the UV light.

In this preferred arrangement it will be appreciated that, depending upon the angle of incidence of the rays of UV light that shine on the security element, the focusing means will either direct the UV light towards a fluorescent zone (having a first colour), a second fluorescent zone (having a second colour), or combinations of both (having a colour that is the result of a blend of the first and second colours), thereby causing the colour of fluorescence to vary.

It is envisaged that the security element may be used in combination with other types of security element, such as a holographic device. It is envisaged that the incorporation of the security element of the invention in a quiet area of the hologram can enhance the usefulness of the hologram as a security device.

A further advantage of the security element of the invention is that it can be incorporated anywhere on the value document and does not necessarily require a 'quiet area' to function. A 'quiet area' of a value document is a region with little or no markings that might clash with the security element.

Preferably the security element is incorporated into a value document and may be provided as a rectangular, square, circular element or other shape or a thread or strip element. In particular, the term 'value document' is considered to encompass all documents which might be subject to counterfeiting, such as currency (i.e. bank notes), passports, other legal documents and certificates. It is envisaged that the achievable dimensions of the security element of the present invention mean that it could also be applied to other objects to validate their authenticity; for example CDs and DVDs.

Preferably the reflecting layer may be a metallic reflecting layer comprising a polymer substrate having a metallised coating. Further preferably the polymer substrate is UV transparent. Polyolefins such as polypropylene and polyethylene are considered to be suitable for the polymer substrate. More specific examples of suitable polymer substrates include: TPX a 4-methylpentene-1 based polyolefin manufactured by Mitsui Chemicals, Inc; fluorinated polymers such as a tetrafluoropolymer homopolymer (PTFE- Tecnofluor/DuPont) and its copolymers with hexafluoropropylene (FEP 1000 C-DuPont) and perfluoroalkoxy (PFA 500 CLP-Dupont); or an acrylic such as polymethyl methacrylate (PMMA).

Preferably the metallic reflecting layer may be provided by an aluminium sputtered backing on a polymer substrate. Alternatively the metallic reflecting layer may be provided by a foil.

Whilst metallisation is the preferred means to form the reflective layer, it is envisaged that the reflective layer may be provided by any suitable reflective metal and in fact the polymer itself could have reflective properties.

Preferably the reflecting layer may be constructed and arranged to enable the visualisation of a secondary image that is visible only under UV light and which can be either above, below or both above and below the plane of the security element.

Preferably the array of focusing means on the reflective layer may be provided by microscopic mirrors or troughs. The mirrors or troughs are shaped so as to reflect and focus rays of UV light on to particular fluorescent zones thereby eliciting a particular coloured fluorescence.

Preferably the pre-printed fluorescent zones may define a letter or numeral representing a characteristic or denomination of a banknote.

Preferably the pre-printed layer may be constructed and arranged to enable the visualisation of a secondary image that is visible only under UV light and which can be either above, below or both above and below the plane of the security element.

Preferably the pre-printed layer may comprise an array of focusing means.

Preferably the pre-printed layer may be protected by an overcoat to reduce the impact of wear.

Preferably the fluorescent zones may be printed with fluorescent compounds. Further preferably the fluorescent compounds are mixed with small amounts of quenching agents or UV absorbers to reduce the impact of unwanted fluorescence created by low intensity and non specific UV light. Alternatively the fluorescent compounds may have an intensity threshold before they fluoresce. In this way the fluorescent compounds only fluoresce when UF light is specifically focused thereon.

Preferably the overall thickness of the security element may be in the region of 20 microns. However the thickness of the security element is partly a function of the ability to print the ink down and the final print resolution. A thinner security element reduces the chance of tears caused by wear and flexion at the interface between the edge of the security element and the value document substrate be it paper or polymer, or by the document becoming snagged in any processing machine. It also makes it more difficult for a counterfeiter to attempt to reproduce the effect by other physical means sufficiently well to fool an unsuspecting member of the public. This is subject to other physical constraints which can lead to distortion if the security element is too thin - particularly during the process of applying the security element to a banknote.

The present invention also provides a method of improving the security of a value document comprising: applying a security element according to any preceding claim to the value document.

It is known that multilenticular arrays can be used to provide 3D images of the kind that are not possible with a hologram. However, a security label including such has to be quite thick because the thickness is highly dependent on the ability to print as finely as possible and upon the refractive index of the material in use. The advantage of the arrangement of the present invention is that the refractive index of the material is irrelevant for the primary effect.

In addition, if optional secondary lensing (i.e. in the pre-printed layer) is used in the security element of the present invention to help create a 3D effect, then the refractive index may have some impact, but such is considered relatively minor since most of the 3D effect is created by the shape of the myriad of tiny mirrors.

### Brief Description of the Drawings

The present invention will be described further with reference to the accompanying drawings, in which:
Figures 1 and 2 illustrate the underlying concept of the security element of the invention;
Figures 3, 4 and 5 illustrate the effect of illuminating one of the cells, firstly directed from the right, then above and finally from the left;
Figure 6 illustrates the cell of figure 3, in which, when illuminated by UV light, the numeral appears to be positioned behind the note, the numeral being in a first colour;
Figure 7 illustrates the cell of figure 4, in which, when illuminated by UV light, the numeral appears to be positioned behind the note, the numeral being in the first and second colours;
Figure 8 illustrates the cell of figure 5, in which, when illuminated by UV light, the numeral appears to be positioned behind the note, the numeral being in a second colour;
Figure 9 illustrates a preferred arrangement of the security element of the present invention;
Figure 10 illustrates an example of how the security element of the invention, in the form of a security element may be positioned on a banknote;
Figure 11 illustrates a cross-section of a security element of Figure 10, applied to a banknote.
Figure 12 illustrates the array of metallised mirrors provided on the back layer of the security element.

### Detailed Description of the Present Invention

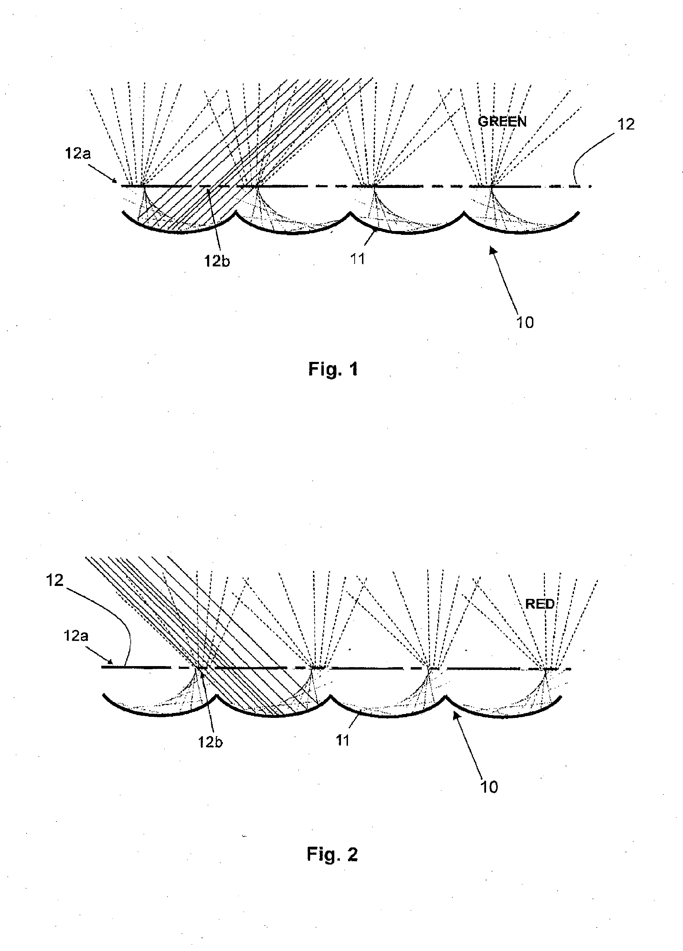

Referring now to the drawings, Figures 1 and 2 schematically illustrate the underlying concept of the invention, illustrating the optical effects involved. Firstly, the security element of the invention comprises a security element 10, comprising a rear foil 11, suitably a polymer foil, which is metallised, for example, by aluminium sputtering to provide a reflective surface, or mirrored portions, over which it is printed an arrangement of fluorescent zones 12 comprising at least two colours.

As already detailed above, the polymer that provides the basis of the reflective layer 11 may suitably be a polyolefin, such as polypropylene and polyethylene.

The distinct fluorescent zones shown in Figures 1 and 2 are 12a, which is represented by a continuous line, and 12b, which is represented by a dashed line.

When illuminated with a UV lamp, moving the security element relative to the UV lamp varies the angle of incidence of the UV light. This in turn varies the position of focus and thereby varies the colour emitted from the respective fluorescence zones.

The security element 10 illustrated in Figures 1 and 2 is pre-printed with two different coloured fluorophores, having half of such corresponding to a green fluorophore, 12a, and the other half corresponding to a red fluorophore, 12b. It is important to realise that the printed areas do not have to be made in register with the mirrors, but the two or more colours do need to be in register with one another and the distance from a point on one mirror to a similar point on an adjacent mirror.

Referring specifically now to Figure 1, in which the security element 10 is illuminated from the right with UV light with the consequence that the incident light is focused onto the green fluorescent zone of the pre-printed foil so that the security element fluoresces green. In contrast, with reference to Figure 2, such similarly shows an arrangement in which the security element is illuminated with UV light from the left and in which the mirrored back surface 11 focuses the light onto the red fluorescent zone, so that the security element fluoresces red.

It will be appreciated that such arrangement illustrates only a portion of the rear surface 11 of the security element, which can contain many thousands of mirrored portions, whilst the pattern of the pre-printed foil layer 12 is arranged to produce selected pre-determined patterns according to requirements, for example, indicating a number corresponding to the denomination of a banknote to which the security element incorporating the foil, is applied. As such, the printed pattern on the security element can provide, for example, the number '20', for a twenty pound note, in a first colour with a background in a second colour, and when the security element, or note to which such is applied, is tilted or angled under a UV light can present a primary image consisting of a numeral in a first colour with a background in a second colour, or a different image altogether such as a numeral becoming a portrait The colour of the numeral or other image and its respective background will vary according to the angle at which the incident UV light is applied to the note, when moved laterally or tilted vertically, as will be explained later.

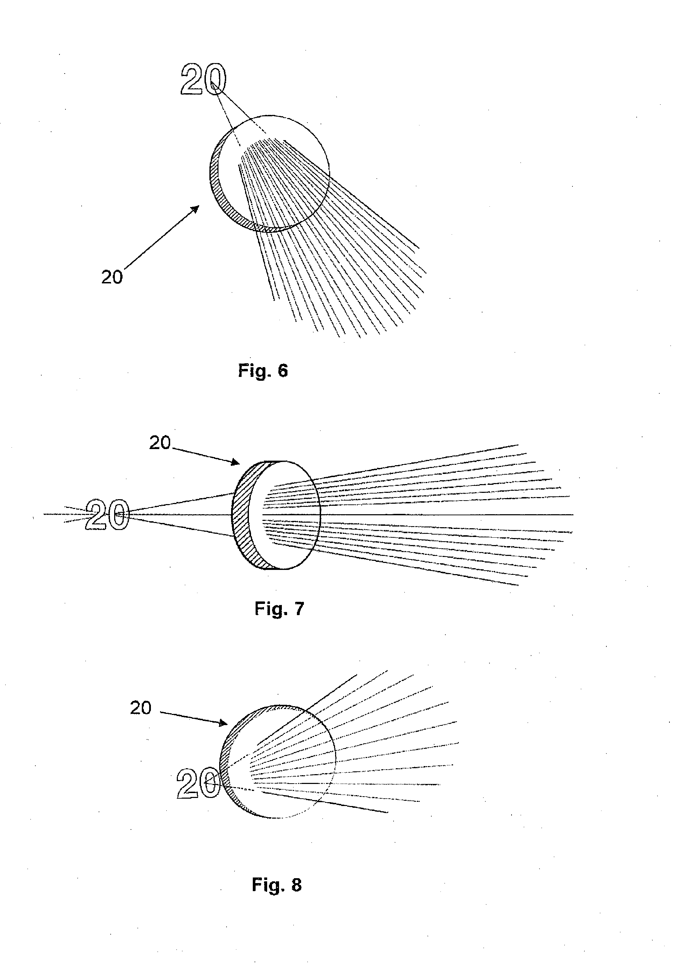

Additionally, a secondary image (which is the number '20' in the examples shown in Figs 6 to 8) can be made to appear to be either in the front of or behind the primary image (also a '20'), or indeed both. It is envisaged that by using mirrors with a hyperbola shape the secondary image can be created in front of the primary image. Whereas using mirrors with an ellipse shape can be used to create an image behind the primary image. It is also understood that the secondary image can be created both in front and behind the primary image by using a combination of the above described mirror shapes.

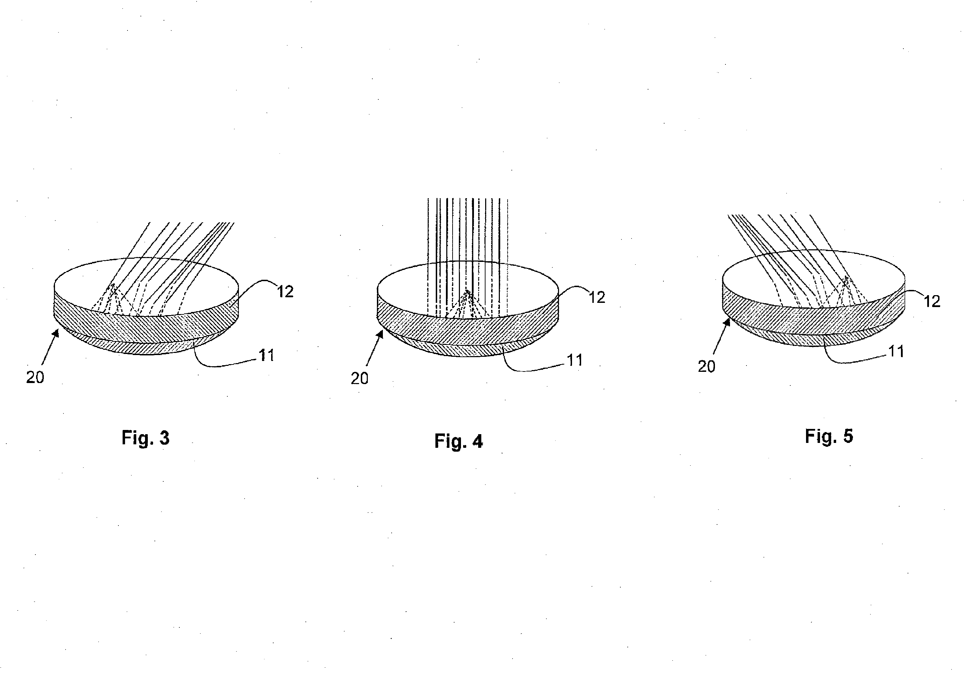

In order to aid understanding, Figures 3, 4 and 5 show an individual cell 20 of the security element 10, which comprises a rear reflecting surface 11 and an overlaid layer pre-printed with at least two different coloured fluorophores. Figure 3 shows the optical effect when the cell is illuminated, preferably with UV light, from the right. Figure 4 shows the optical effect when the cell is illuminated, preferably with UV light, from head on. Figure 5 shows the optical effect when the cell is illuminated, preferably with UV light, from the left.

Upon consideration of Figure 3 it will be appreciated that when cell 20 is tilted relative to the UV light source such that UV light comes from the right the UV light is focused by the reflecting layer 11 on to the green fluorophore zone, which results in the cell emitting a green light.

Upon consideration of Figure 4 it will be appreciated that when cell 20 is oriented directly head on to the UV light source the UV light focused by the reflecting layer 11 on to the fluorophore in the centre of the cell. The excited fluorophore emits light in all directions and, in particular, some of this light is emitted back into the security element. This light can be utilised to create some interesting effects, and since the light can go back almost in parallel, it can be manipulated once more. Thus, if we have red on one side and green on the other with some overlap the result is yellow or orange.

From Figure 5 is will be appreciated that when cell 20 is tilted relative to the UV light source such that UV light comes from the left the UV is focused by the reflecting layer 11 on to the red fluorophore zone, which results in the cell emitting a red light.

Thus, the figures referred to above illustrate in detail the manner in which the respective cells generate light emissions depends upon the angle of the incident UV light.

Figures 6, 7 and 8 show an alternative view of the individual cell that is shown in Figures 3, 4 and 5 respectively.

Figure 6 shows an alternative view of the cell of Figure 3, in which the cell is oriented in a vertical plane rather than a horizontal plane. This time rather than tilting the cell left so that the UV light comes from the right, the cell is tilted upwards at an angle to the face on UV light. This results in fluorescent emission and the emission pictured here is the light that fluoresces back towards the mirror. In Figure 6 the number '20' is green coloured, and appears to come from a point behind the real image and above.

Figure 7 shows an alternative view of the cell of Figure 4, in which the cell is oriented in a vertical plane rather than a horizontal plane. Again the cell oriented so as to face the UV light head on. Here the light fluoresces back on to the mirror appears to create a virtual image directly behind the cell.

Figure 8 shows an alternative view of the cell of Figure 5, in which the cell is oriented in a vertical plane rather than a horizontal plane. This time rather than tilting the cell right so that the UV light comes from the left, the cell is tilted downwards so that the UV light comes from above. In Figure 8 the number '20' is red coloured, and the virtual image created by the fluorescence appears to come from below the real image

In Figure 7 the interesting effects of the security element 10 can be demonstrated with reference to a single cell 20 when tilted in a lateral plane. In this example, the security element can provide a virtual image, corresponding to that on the pre-printed foil of the security element, behind the note, which when tilted left or right gives a single colour, but will provide different colours when tilted up (see Figure 6) or down (see Figure 8) in a vertical plane. The image can be made to be in front of the plane of the security element or note or to be both in front or behind, although in this last instance, the images would be half as bright. The virtual image appears as though it is exactly at a fixed focal point behind the note to which it is applied. In this instance, the numeral '20' will be either yellow or orange.

The situation shown in Figure 6 illustrates what happens the security element is tilted upwards in a vertical plain, whilst the number would appear as a fluorescent image on a surface of the security element, a virtual image would also be presented behind the note and slightly above. Here, the numeral comprising the image could be green and will have a red background.

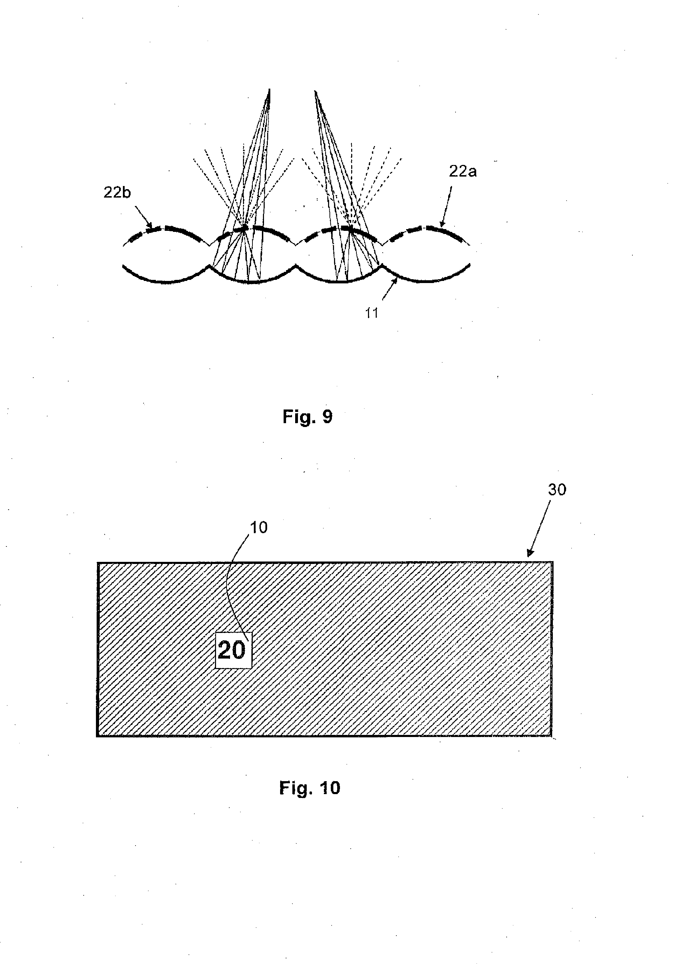

As the security element is moved back towards the central position, the image will stay red until it is aligned with the rear of the note, again returning to the yellow/orange colour, unless the note is continued to be tilted in the vertical plain, in which case the image turns to green, appearing below the note (as shown in Figure 8) whilst the background to the numeral turns to red. Figure 9 shows a preferred embodiment of the present invention, wherein the printed layer preferably includes shaping to improve focus as well as the depth of field of the kinetic image that is visualised either behind or in front of the security element (or both). The fluorescent zones 22a and 22b shown in Figure 9 correspond to the fluorescent zones 12a and 12b that are shown in Figures 1 and 2, for example.

It will be appreciated that the security element of the present invention not only provides an optically variably security element (OVD) capable of changing the colour or nature of an image depending upon the angle of which such is viewed under a UV light, but also, by virtue of the careful design of the mirrors and upper surfaces of the security element is able to project a virtual image either in front or behind or both in front of and behind the plane of the security element or the note to which the security element is applied (a dual image can be created by using alternating focal points of adjacent mirrors), which virtual image will also vary according to the orientation of the note relative to the instant angle of the UV light applied.

By virtue of the arrangement of the mirrored metallised portion and the pre-printed fluorescent, ideally, lensed portions, overlaying the mirrored portion, the security element cannot easily be reproduced thus preventing reverse engineering and the making of contact prints therefrom.

Further, the ability of the security element to provide virtual images above or below the note, or both, will be very difficult to achieve by potential counterfeiters without access to extremely expensive equipment, whilst the strong colour switch from red to green in the vertical tilt for the arrangement described will inspire user confidence, and the variation of the colours achievable at various angles and the position of the virtual images will ensure that tellers will spend longer studying the document, which will improve the effectiveness of the security element when applied to a banknote.

Referring now to Figure 10, this illustrates an example of a value document 30 to which a security element 10, of the type previously described, has been applied and such may be incorporated as an individual element, e.g. a square or a circle within the banknote or a strip applied thereto.

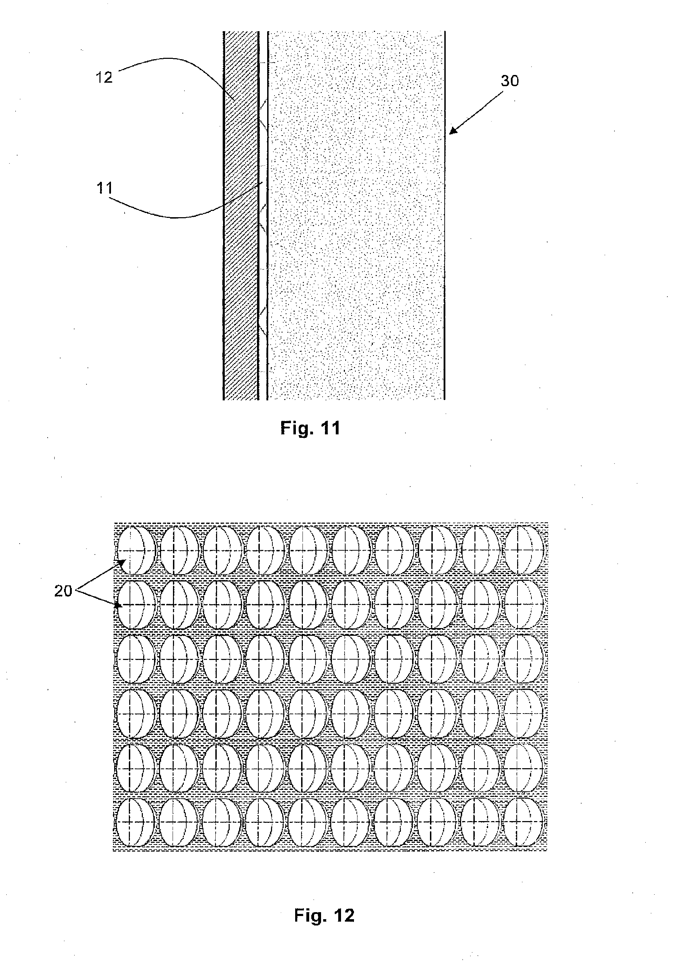

Referring now to Figures 11 and 12, Figure 11 illustrates a cross- sectional view of the security element 10 applied to a note, e.g. a banknote, whilst Figure 12 illustrates a microscopic view of the rear layer 11, showing the array of thousands of microscopic mirrors/lenses comprising the rear substrate and pre-printed layer forming the security element 10.

The security element 10 may be, for example, 14 - 20 microns in depth, applied to a note having, for example, a thickness of in the region of 75 microns. However, the thickness of the security element 10 is a function of the ability to print the fluorescent inks down and the finer the print resolution, the thinner the security element could be made. However, there are other physical constraints, such as distortion, which can occur if the security element becomes too thin.

The advantages of the arrangement of the invention are that such can extend the benefits of the existing holograms by utilising the "quiet areas" around images on the hologram, so that such can be combined with existing arrangements but provide enhanced effects. Further, the images are visible only under UV light and no background colour or visible colour image occurs in ordinary daylight, so that such is unobtrusive to ordinary consumers but is readily available as security feature at level 2 for teller / retail use.

Further, since the hologram can be pre-applied to the substrate as normal, but being part of a two-part system, will not become active until the fluorescent pigments have been printed over the hologram, which printing of the fluorescence can be done separately at a printing works, such will offer a higher level of security.

Thus, it is believed that this invention provides a significant improvement in security over existing holographic devices and especially over existing directly printed UV features providing increased teller/retailer confidence and significantly reducing the possibilities of counterfeiting.

Ideally, the security element can be applied to banknotes but equally such could be applied to any other secure documents, including credit cards, passports, identity cards or the like to provide similar levels of security.

It is clear from initial inspection of the security element that the UV light has to pass through the fluorescent layer laid down onto the surface of the security element. As such it has the potential to be absorbed non-specifically by fluorophores before it has been focussed. This light is of generally low intensity so it is important to choose fluorescent dyes are pigments that have a relatively high threshold before they fluoresce.

The fluorescent materials used in this application are ideally highly light stable and might be mixed with absorbers or quenching agents in order to generate the threshold effect and increase the light stability.

Optionally the security element might be provided with an overcoat to improve the wear resistance, especially since the fluorescent materials have been printed on the upper surface. This could be done prior to embossing the upper surface with a series of curves to act as lenses and provision would have to be made in the design to account for the refractive indices of the substrate polymer and the coating.

## Claims

1. A security element (10) for incorporation into value documents (30), comprising a reflecting layer (11) having an array of focusing means **characterised by** being overlaid with a layer having at least one pre-printed fluorescent zone (12), and whereby, when the security element is illuminated by UV light, the security element will vary between a state of fluorescence and non-fluorescence according to the angle of incidence of the UV light.

2. A security element as claimed in claim 1, wherein the reflecting layer is overlaid with a layer having at least two pre-printed ffuorescent zones of differing colour, and whereby, when the security element is illuminated by UV light, the colour of fluorescence of the security element will vary according to the angle of incidence of the UV light.

3. A security element as claimed in claim 1 or 2, wherein such forms part of a holographic device incorporated in the documents.

4. A security element as claimed in claim 1 , 2 or 3, wherein the security element is formed over a rectangular, square, circular element or other shape or a thread or strip element.

5. A security element as claimed in any preceding claim, wherein the reflecting layer is a metallic reflecting layer comprising a polymer substrate having a metallised coating; and wherein preferably wherein the polymer substrate is a UV transparent polymer; said polymer substrate preferably being a polyolefin such as polypropylene or polyethylene.

6. A security element as claimed in claim 5, wherein the metallic reflecting layer is produced by aluminium sputtering.

7. A security element as claimed in any preceding claim, wherein the reflecting surface is constructed and arranged to enable the visualisation of a secondary image that is visible only under UV light and which can be either above, below or both above and below the plane of the device.

8. A security element as claimed in any preceding claim, wherein the array of focusing means is provided by microscopic mirrors or troughs.

9. A security element as claimed in any preceding claim, wherein each pre-printed fluorescent zone defines a letter or numeral representing a characteristic or denomination of a banknote.

10. A security element as claimed in any preceding claim, wherein the preprinted layer is constructed and arranged to enable the visualisation of a secondary image that is visible only under UV light and which can be either above, below or both above and below the plane of the security element.

11. A security element as claimed in any preceding claim, wherein the preprinted layer comprises an array of focusing means

12. A security element as claimed in any preceding claim, wherein the pre-printed layer is protected by an overcoat to reduce the impact of wear.

13. A security element as claimed in any preceding claim, wherein each fluorescent zone is printed with a fluorescent compound.

14. A security element as claimed in claim 13, wherein the fluorescent compounds are mixed with small amounts of quenching agents or UV absorbers to reduce the impact of unwanted fluorescence created by low intensity and non specific UV light

15. A method of improving the security of a value document comprising:
applying a security element according to any preceding claim to the value document.

## Patentansprüche

1. Sicherheitselement (10) zur Einbeziehung in Wertdokumente (30), umfassend eine reflektierende Schicht (11) mit einem Array von Bündelungsmitteln, gekennzeichnet durch Überlagerung mit einer Schicht mit zumindest einer vorgedruckten fluoreszenten Zone (12), und wodurch, wenn das Sicherheitselement durch UV-Licht beleuchtet ist, das Sicherheitselement je nach Einfallswinkel des UV-Lichts zwischen einem Zustand der Fluoreszenz und Non-Fluoreszenz wechselt.

2. Sicherheitselement nach Anspruch 1, worin die reflektierende Schicht mit einer Schicht mit zumindest zwei vorgedruckten fluoreszenten Zonen unterschiedlicher Farbe überlagert ist, und wodurch, wenn das Sicherheitselement durch UV-Licht beleuchtet ist, die Fluoreszenzfarbe des Sicherheitselements je nach Einfallswinkel des UV-Lichts wechselt.

3. Sicherheitselement nach Anspruch 1 oder 2, worin derlei Bestandteil einer in die Dokumente einbezogenen holographischen Vorrichtung ist.

4. Sicherheitselement nach Anspruch 1, 2 oder 3, worin das Sicherheitselement über einem rechteckigen, quadratischen, kreisförmigen Element oder sonstiger Form oder einem Faden- oder Streifenelement gebildet ist.

5. Sicherheitselement nach irgendeinem vorhergehenden Anspruch, worin die reflektierende Schicht eine metallische reflektierende Schicht umfassend ein Polymersubstrat mit einer metallisierten Beschichtung ist; und worin das Polymersubstrat vorzugsweise ein UV-transparentes Polymer ist; wobei besagtes Polymersubstrat vorzugsweise ein Polyolefin wie Polypropylen oder Polyethylen ist.

6. Sicherheitselement nach Anspruch 5, worin die metallische reflektierende Schicht durch Aluminium-Sputtering hergestellt wird.

7. Sicherheitselement nach irgendeinem vorhergehenden Anspruch, worin die reflektierende Oberfläche aufgebaut und angeordnet ist, um die Visualisierung eines sekundären Bilds zu ermöglichen, das nur unter UV-Licht sichtbar ist und das entweder oberhalb, unterhalb oder sowohl oberhalb als auch unterhalb der Ebene der Vorrichtung sein kann.

8. Sicherheitselement nach irgendeinem vorhergehenden Anspruch, wobei das Array von Bündelungsmitteln durch mikroskopische Spiegel oder Vertiefungen bereitgestellt wird.

9. Sicherheitselement nach irgendeinem vorhergehenden Anspruch, worin jede vorgedruckte fluoreszente Zone einen Buchstaben oder eine Ziffer repräsentierend ein Merkmal oder eine Denominierung einer Banknote definiert.

10. Sicherheitselement nach irgendeinem vorhergehenden Anspruch, worin die vorgedruckte Schicht aufgebaut und angeordnet ist, um die Visualisierung eines sekundären Bilds zu ermöglichen, das nur unter UV-Licht sichtbar ist und das entweder oberhalb, unterhalb oder sowohl oberhalb als auch unterhalb der Ebene des Sicherheitselements sein kann.

11. Sicherheitselement nach irgendeinem vorhergehenden Anspruch, worin die vorgedruckte Schicht ein Array von Bündelungsmitteln umfasst.

12. Sicherheitselement nach irgendeinem vorhergehenden Anspruch, worin die vorgedruckte Schicht durch eine Deckschicht geschützt ist, um die Auswirkung von Verschleiß zu mindern.

13. Sicherheitselement nach irgendeinem vorhergehenden Anspruch, worin jede fluoreszente Zone mit einer fluoreszenten Zusammensetzung bedruckt ist.

14. Sicherheitselement nach Anspruch 13, worin die fluoreszenten Zusammensetzungen mit geringen Mengen von Abschreckmitteln oder UV-Absorbern gemischt sind, um die Auswirkung von unerwünschter, durch schwachintensives und nichtspezifisches UV-Licht verursachter Fluoreszenz zu mindern.

15. Verfahren zur Verbesserung der Sicherheit eines Wertdokuments, umfassend:
Anwenden eines Sicherheitselements nach irgendeinem vorhergehenden Anspruch auf das Wertdokument.

## Revendications

1. Élément de sécurité (10) destiné à être incorporé dans des documents de valeur (30), comprenant une couche réfléchissante (11) comportant un réseau de moyens de focalisation, **caractérisée en ce qu'**elle est superposée par une couche comportant au moins une zone fluorescente pré-imprimée (12), et ainsi, quand l'élément de sécurité est éclairé par une lumière UV, l'élément de sécurité varie entre un état de fluorescence et de non-fluorescence selon l'angle d'incidence de la lumière UV.

2. Élément de sécurité selon la revendication 1, dans lequel la couche réfléchissante est superposée par une couche comportant au moins deux zones fluorescentes pré-imprimées de couleur différente, et ainsi, quand l'élément de sécurité est éclairé par une lumière UV, la couleur de fluorescence de l'élément de sécurité varie selon l'angle d'incidence de la lumière UV.

3. Élément de sécurité selon la revendication 1 ou 2, ledit élément de sécurité faisant partie d'un dispositif holographique incorporé aux documents.

4. Élément de sécurité selon la revendication 1, 2 ou 3, l'élément de sécurité étant formé sur un élément rectangulaire, carré, circulaire ou d'une autre forme, ou sur un élément de fil ou de bande.

5. Élément de sécurité selon l'une quelconque des revendications précédentes, dans lequel la couche réfléchissante est une couche réfléchissante métallique comprenant un substrat polymère comportant un revêtement métallisé ; et dans lequel, de préférence, le substrat polymère est un polymère transparent aux UV ; ledit substrat polymère étant de préférence une polyoléfine tel que du polypropylène ou du polyéthylène.

6. Élément de sécurité selon la revendication 5, dans lequel la couche réfléchissante métallique est produite par pulvérisation d'aluminium.

7. Élément de sécurité selon l'une quelconque des revendications précédentes, dans lequel la surface réfléchissante est fabriquée et placée pour permettre la visualisation d'une image secondaire visible uniquement sous lumière UV, et peut être au-dessus, au-dessous ou à la fois au-dessus et au-dessous du plan du dispositif.

8. Élément de sécurité selon l'une quelconque des revendications précédentes, dans lequel le réseau de moyens de focalisation est fourni par des miroirs ou des creux microscopiques.

9. Élément de sécurité selon l'une quelconque des revendications précédentes, dans lequel chaque zone fluorescente pré-imprimée définit une lettre ou un chiffre représentant une caractéristique ou une dénomination d'un billet de banque.

10. Élément de sécurité selon l'une quelconque des revendications précédentes, dans lequel la couche pré-imprimée est fabriquée et placée pour permettre la visualisation d'une image secondaire visible uniquement sous lumière UV, et peut être au-dessus, au-dessous ou à la fois au-dessus et au-dessous du plan du dispositif.

11. Élément de sécurité selon l'une quelconque des revendications précédentes, dans lequel la couche pré-imprimée comprend un réseau de moyens de focalisation.

12. Élément de sécurité selon l'une quelconque des revendications précédentes, dans lequel la couche pré-imprimée est protégée par un sur-revêtement pour réduire l'effet de l'usure.

13. Élément de sécurité selon l'une quelconque des revendications précédentes, dans lequel chaque zone fluorescente est imprimée avec un composé fluorescent.

14. Élément de sécurité selon la revendication 13, dans lequel les composés fluorescents sont mélangés avec de petites quantités d'agents modérateurs ou d'absorbeurs d'UV afin de réduire l'effet d'une fluorescence non souhaitée créée par une lumière UV de faible intensité et non spécifique.

15. Procédé d'amélioration de la sécurité d'un document de valeur, consistant à :
appliquer au document de valeur un élément de sécurité selon l'une quelconque des revendications précédentes.
